# EUROPEAN PATENT APPLICATION

(11) **EP 0 616 929 A1**
(43) Date of publication of application: **28.09.1994**
(21) Application number: 94200647.9
(22) Date of filing: 14.03.1994
(51) Int. Cl.: B60R 25/00, B60R 25/02

(54) **Improved mechanical antitheft device for motor vehicles**

(30) Priority: 23.03.1993 IT RE930023 U
(71) Applicant: SILVY COMMERCIALE S.R.L., I-00196 Roma (IT)
(72) Inventor: Polimanti, Pier Luigi, c/o Silvy Commerc. S.R.L., I-00196 Roma (IT)
(74) Representative: Corradini, Corrado

(57) **Abstract**

A downwardly facing fork means (10) is provided, together with a transverse bar (13) movable between the lateral legs (12) of the fork (10) to lock the vehicle pedal levers (7) between the bar (13) and the top of the fork means (10); the device is provided with cap pieces (30), each having a longitudinal cavity (31) into which a respective lateral leg (12) is insertion-fitted, to reduce the useful width of the fork (10) and/or increase the length of the lateral legs (12); and extension pieces (35) to be fixed to the two ends of the transverse bar (13) to correspondingly lengthen said bar (13), the extension pieces (35) being positioned a short distance from and facing the inner lateral faces of the lateral legs (12) or of the cap pieces (30) applied to these, when the transverse bar (13) is in its locking position;
said extension pieces (35) are applied to the fork (10) as an alternative to those cap pieces (30) used for reducing the useful width of the fork 10.

## Description

This invention relates to a mechanical antitheft device for motor vehicles.

For this purpose antitheft devices are known based on a downwardly facing fork with an upper transverse element and two substantially vertical lateral legs, and acting in combination with a transverse bar parallel to the upper transverse element. The transverse bar can be moved between said lateral legs to withdraw from or approach the upper transverse element, and can be locked by a key lock in such a position as to clamp the levers of the vehicle clutch and brake pedals between the bar and the fork means.

This has the effect of coupling the two brake and clutch pedals together while at the same time preventing them from being lowered, so that the vehicle cannot be driven.

Two requirements of said device are very important in determining effective antitheft action.

The first is that the clutch and brake pedals must project externally from their respective levers, while the useful width of the fork (ie the distance between the inner lateral faces of the two lateral legs) must be such that the lateral legs embrace the pedal levers with only a slight clearance. This prevents the fork being able to be withdrawn from the levers, because the pedals strike against the lateral legs.

The second requirement is that the fork must touch the floor when in the locked state, so that the brake and clutch cannot be operated. Any excessive clearance would enable these controls to be at least partly operated, with the risk that the thief could remove the vehicle.

As both the distance between the brake and clutch pedal levers and the distance between these levers and the vehicle floor vary in the various vehicles, different antitheft models must be produced in which the fork and transverse bar dimensions vary.

An object of the present invention is to obviate said drawback by providing an improved mechanical antitheft device which can be adapted to different vehicle models within the framework of a relatively simple and economical construction, and which is highly effective in terms of its antitheft action.

This and further objects are attained by the invention as characterised in the claims.

The invention is described in detail hereinafter with the aid of the accompanying figures, which illustrate one embodiment thereof.
Figure 1 is a perspective view of an antitheft device according to the invention.
Figure 2 is a front view of the lower part of the device of Figure 1 with some parts shown in section.
Figure 3 is an enlarged detail of Figure 2 in a different configuration.
Figure 4 is a side view of Figure 1 with some parts shown in section.
Figure 5 is a section on the plane V-V of Figure 4.
Figure 6 is an axial section through a second embodiment of the cap pieces 30,
Figure 7 is a section on the plane VII-VII of Figure 6.
Figure 8 is an axial section through a second embodiment of the extension pieces 35.
Figure 9 is a side view of a second embodiment of the means 40.

The device to which the invention is applied comprises a downwardly facing fork means 10 with an upper transverse element 11 and two substantially vertical lateral legs 12.

The means 10 cooperates with a transverse bar 13 parallel to the upper element 11 and movable between the lateral legs 12 away from or towards the upper element 11.

The transverse bar 13 is operated by an articulated rod 14 having a lower portion 14' and an upper portion 14'' hinged together with the ability to swivel about a transverse horizontal axis.

The fork means 10 is fixed to the lower end of a tubular handle 16 by which the fork is manipulated.

The rod 14 is arranged axially slidable within the handle 16. To move the rod 14 there is provided a grip 18 slidable on the outer surface of the handle 16 and fixed to the rod 14 by a radial screwed pin 19 which passes through the thickness of the tubular handle 16 and engages in the portion 14'' lying within the handle 16. To enable the pin 19 to move, the handle 16 possesses a longitudinal slot 22. A fixed grip 24 is fixed to the upper portion of the handle 16.

By acting with one hand on the grip 18 the transverse bar 13 can be lowered and raised relative to the fork 10.

The fact that the rod 14 is articulated enables the lower portion 14' to swivel when that portion is in a downward position completely outside the handle 16. This facilitates the movements involved in arranging the fork 10 straddling the two levers 7 of the brake and clutch pedals 8. By then pulling the rod 14 upwards the lower portion 14' again enters the tubular handle 16 and the levers 7 become enclosed between the top of the fork 10 and the bar 13, this being positioned substantially in the plane defined by the two legs 12. This position is then locked by a key lock 25 provided in the fixed grip 24 and comprising a pawl or other known means to lock the upper portion 14'' of the rod 14. For this purpose the upper portion 14'' comprises a succession of grooves in its surface.

According to the present invention there are provided cap pieces 30 each with a longitudinal cavity into which a respective lateral leg 12 is insertion-fitted. The cap pieces are able to reduce the useful width of the fork and/or increase the length of the lateral legs 12. The invention also comprises extension pieces 35 to be fixed to the two ends of the bar 13 to correspondingly lengthen said bar. The extension pieces 35 are positioned a short distance from and facing the inner lateral faces of the lateral legs 12 or of the cap pieces 30 applied to these, when the transverse bar 13 is in its locking position. Said extension pieces 35 are applied as an alternative to those cap pieces 30 used for reducing the useful width of the fork 10.

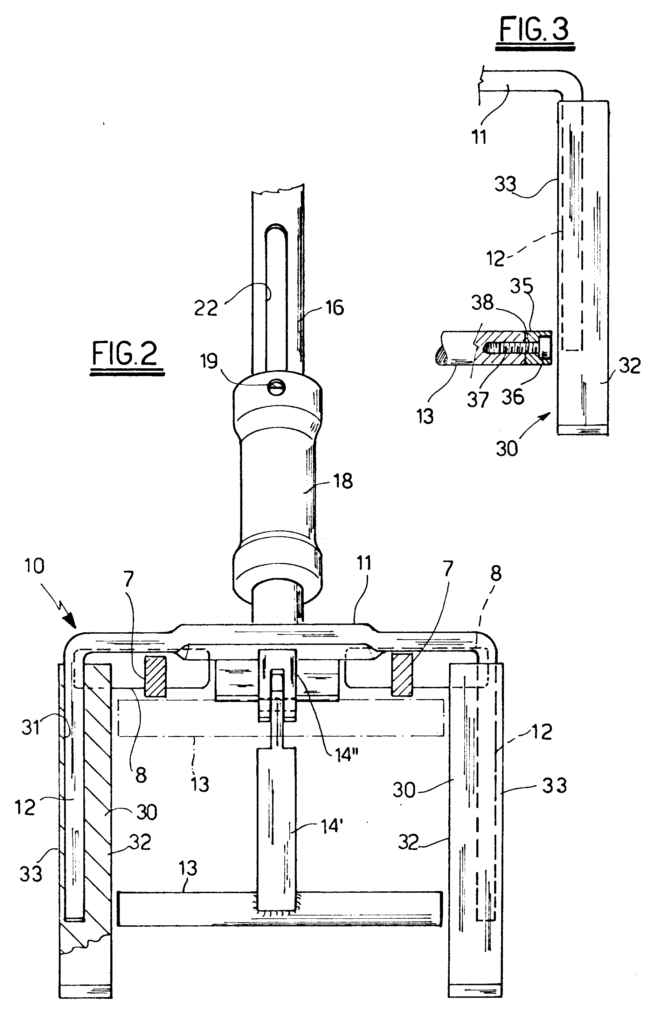

Figures 2, 3, 6 and 7 show cap pieces of the type used for increasing the length of the legs 12. They comprise a lower portion which extends downwards beyond the end of the lateral legs 12 to which they are applied, until it comes substantially into contact with the floor 6 when the antitheft device is applied to the pedal levers 7.

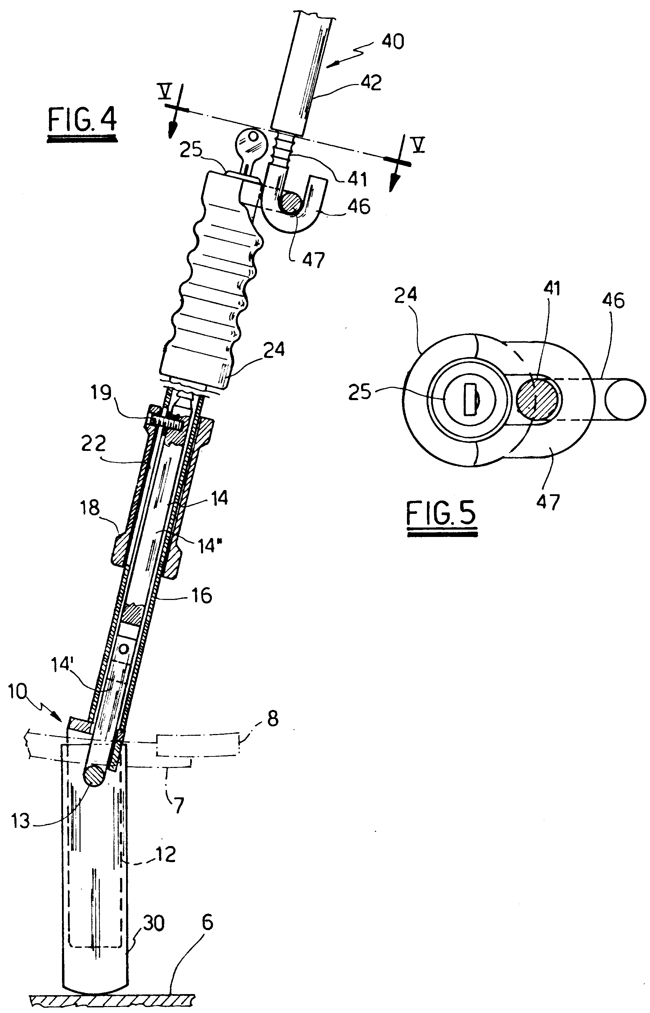

In the embodiment shown in Figure 2, the cavity 31 is provided in the upper portion of the cap piece 30, the lower portion being solid and not comprising the cavity 31. When mounted about the respective legs 12, the cap pieces 30 increase their length to the extent that their lower ends rest on the vehicle floor 6 (Figure 4).

Each cap piece 30 encloses the entire or nearly entire length of the respective lateral leg 12 in the manner of a cap.

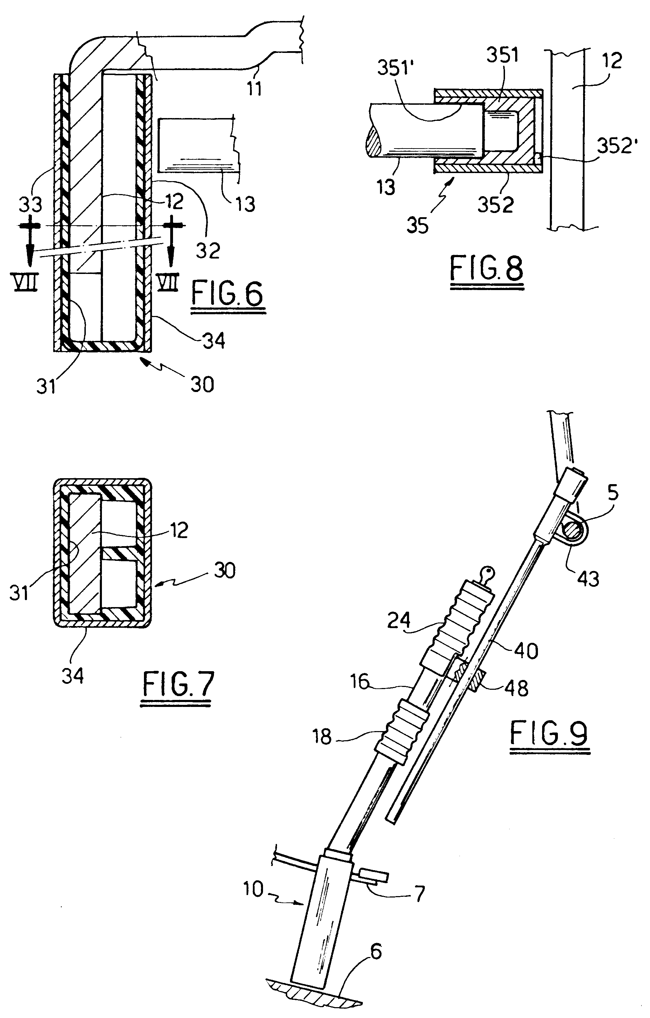

In the embodiment shown in Figure 6, the cavity 31 is particularly shaped to lighten the cap piece 30 and in addition can extend through its entire length. The cap piece 30 encloses the entire length of the leg 12 and its upper end abuts against the upper transverse element 11.

The cap pieces can be constructed of synthetic resin or elastomeric material, and tubular elements 34 of steel or equivalent hard material can be provided to surround said cap pieces 30 in order to protect them against cutting or other tampering (Figures 6, 7).

The cavity 31 is displaced sideways transversely from its axial position so that the distance between the cavity 31 and the lateral face 32 or 33 of the cap piece 30 in a transverse direction is greater on one side than on the other.

In addition the cap pieces 30 can be mounted about the respective lateral legs 12 in at least two different positions rotated angularly through 180° about the axis of the legs 12.

Consequently the cap pieces 30 can be mounted about the respective legs 12 such that said greater distance between the cavity 31 and the lateral face 32 of the cap piece 30 is towards the interior of the fork 10 in the case of both pieces 30. In this manner the useful width (ie the distance in the transverse direction between the opposing inner lateral faces 32 and 33 of the cap pieces 30) assumes a minimum value (Figures 2 and 6).

Figure 3 shows the position of the cap piece 30 in which the lesser distance between the lateral face 33 and the cavity 31 is towards the interior. In this case the useful width of the fork 10 is greater than in the case of Figure 2.

If the cap pieces 30 are to be used only to reduce the useful width of the fork 10, they can obviously be of the same length as the legs 12 on which they are mounted.

In detail, in the embodiment shown in Figure 3, each extension piece 35 comprises an axial hole 36 of greater diameter to house the head of a socket head screw 37, and a hole 38 of lesser diameter for the shank of the screw 37.

The extension piece 35 is then fixed by the screw 37 to the end of the bar 13 where a threaded hole is provided for the screw 37 (Figure 3).

Said extension pieces 35 are positioned a short distance from and facing the inner lateral face 32, 33 of the cap pieces 30, or of the lateral legs 12 (if the cap pieces 30 are not applied), when the bar 13 is in its locking position. It is therefore impossible or nearly impossible to remove the screw 37 in order to remove the extension pieces 35 from the bar 13.

In the embodiment shown in Figure 8, each extension piece 35 comprises a first element 351 of relatively soft and deformable material, for example synthetic resin, having a blind cavity 351' extending along only part of the element length, to receive the end of the bar 13 by slightly forced insertion. That part of the element 351 not comprising the cavity 351' serves to lengthen the bar 13. A hollow second element 352 of steel is mounted over the element 351 by slight forcing and comprises at its outer end a projection 352' which abuts against the outer end of the element 351 to prevent its axial withdrawal from this element. As the outer end of the extension piece 35 is positioned only a short distance from the cap pieces 30 or legs 12, it is impossible to withdraw either the element 351 or the element 352.

By fitting the cap pieces 30 to the lateral legs 12 these are able to assume a greater length, whereas without the cap pieces 30 their length is less. Hence by providing the antitheft device with one or more pairs of cap pieces 30 of different length, the device can be adapted to different vehicle models in which the distance between the levers 7 and the floor 6 is different, such that when the device has been locked onto the levers 7 the lateral legs 12 touch or nearly touch the floor 6 by virtue of the possible cap pieces 30.

In addition or alternatively, the useful width of the fork 10 can be varied by either arranging the cap pieces 30 on the legs 12 in a suitable position or by leaving them off, so as to be able to adapt the device to different distances between the levers 7, as is the case with different vehicle models, in order to always set said useful width to just greater than the distance between the outer faces of the pairs of levers 7. This reliably prevents the fork 10 being able to be withdrawn from the pedals 8.

Moreover, using the extension pieces 35 the length of the transverse bar 13 can be varied so that their ends arrive just a short distance from the inner lateral faces of the fork 10, ie the faces 32 or 33, or the inner lateral faces of the legs 12 (if the cap pieces 30 are not used).

The levers 7 are hence enclosed and confined between the fork 10 and bar 13 without the possibility of their release via possible passage gaps.

Hence, by providing the antitheft device with one or more pairs of cap pieces 30 and one or more pairs of extension pieces 35, the device can be adapted to different vehicle models, by compensating the variation in the distance of the levers 7 from the floor and the variation in the distance between the levers 7 and/or the variation in the length by which the pedals 8 project beyond the levers 7. Basically, an antitheft device is achieved which can be adapted to the various commercially available vehicle models.

In practice it has been found that the following three configurations can be sufficient for almost all the automobiles in circulation:
A (So-called "narrow" configuration)
   Only two short cap pieces 30 (ie which do not increase the length of the legs 12) are applied, arranged such as to reduce the useful width of the fork 10;
B (So-called "wide" configuration)
   Short cap pieces 30 are not applied, but only two extension pieces 35 to increase the length of the transverse bar 13 to reach the legs 12;
C (So-called "long" configuration)
   Only two long cap pieces 30 (ie increasing the length of the legs 12) are applied, arranged such as to reduce the useful width of the fork 10.

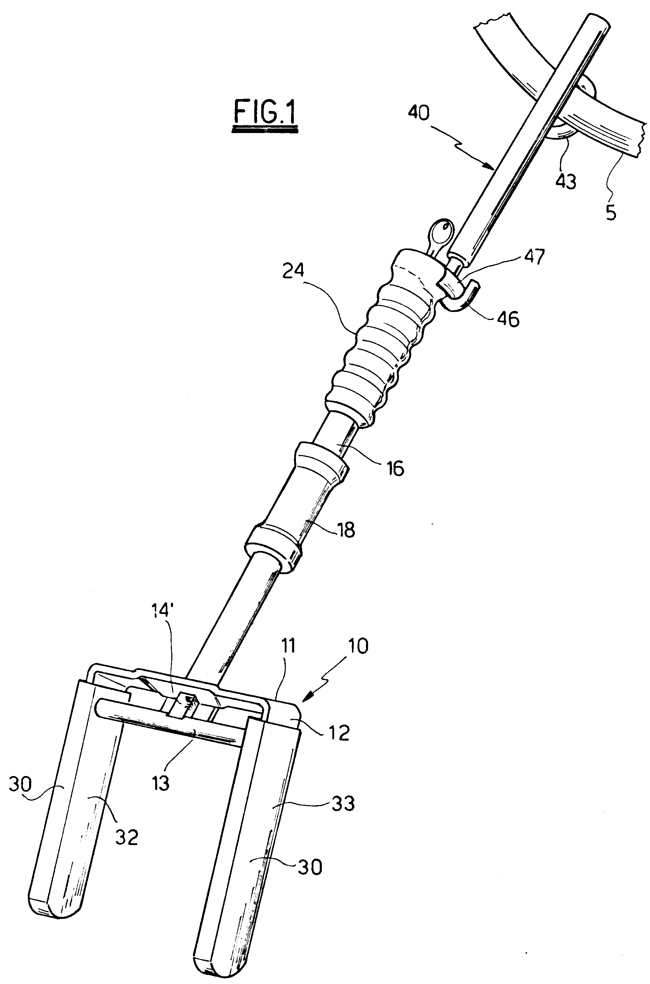

To improve the antitheft action, the invention also comprises a rod 40 (Figures 1, 4 and 5), in particular telescopic, comprising a lower stem 41 connected by a thread to the tubular upper portion 42. The length of the lower stem 41 which projects from the portion 42 can be adjusted at will, so as to adjust the total length of the rod 40.

The rod 40 is hooked by means of its lower end to the upper end of the handle 16 by first longitudinally acting hooking means, and also possesses second hooking means 43 at the upper end of the rod 40 to hook onto the vehicle steering wheel 5 and be fastened by a lock.

Said hooking means at the lower end of the rod 40 comprise an upwardly facing U-shaped hook 46 provided on the lower end of the stem 41 and inserted through an eyelet 47 rigid with the fixed grip 24. The upper hooking means 43 are of known type in rods for connecting the steering wheel to a vehicle pedal. As the hooking means 43 prevent longitudinal movement of the rod 40, release of the hook 46 from the eyelet 47 is prevented.

The embodiment shown in Figure 9 differs from the preceding in that the lower portion of the rod 40 is simply rectilinear and, when the rod 40 is hooked to the steering wheel 5, it is inserted as an exact fit, and hence movable only in the axial direction, through a holed member 48 joined to the handle 16 so that it projects therefrom. As the rod 40 cannot move axially, it behaves as a body rigid with the handle 16.

If the rod 40 is not hooked to the steering wheel 5, the rod can be easily and rapidly detached from the handle 16 in order to enable only the fork 10 and bar 13 to be used if required.

In addition to providing an antitheft action additional to the action of the fork 10 and bar 13, the rod 40 also serves to correctly maintain the fork 10 in a vertical or nearly vertical position.

## Claims

1. An improved mechanical antitheft device for motor vehicles, comprising:
- a downwardly facing fork means (10) having an upper transverse element (11) and two substantially vertical lateral legs (12);
- a transverse bar (13) movable between the lateral legs (12) away from or towards the upper transverse element (11) and be locked by a lock (25) in such a position as to lock the levers (7) of the motor vehicle pedals between the bar (13) and the upper part of the fork means (10);
- when in its locking position, said transverse bar (13) lying substantially within the plane defined by the two lateral legs (12);
characterised by comprising cap pieces (30), each having a longitudinal cavity (31) into which a respective lateral leg (12) is insertion-fitted, to reduce the useful width of the fork (10) and/or increase the length of the lateral legs (12); extension pieces (35) to be fixed to the two ends of the transverse bar (13) to correspondingly lengthen said bar (13), the extension pieces (35) being positioned a short distance from and facing the inner lateral faces of the lateral legs (12) or of the cap pieces (30) applied to these, when the transverse bar (13) is in its locking position;
said extension pieces (35) being applied as an alternative to those cap pieces (30) used for reducing the useful width of the fork 10.

2. A device as claimed in claim 1, characterised in that the longitudinal cavity (31) of the cap pieces (30) is displaced sideways in the transverse direction from the cap piece axis such that when the cap pieces (30) are arranged with their lateral face (32), namely that more distant from the longitudinal cavity (31), facing the interior of the fork (10), the useful width of the fork (10) is reduced.

3. A device as claimed in claim 1, characterised in that the cap pieces (30) have a lower portion which extends below the lateral legs (12) to which they are applied, such that it comes substantially into contact with the floor (6) when the antitheft device is applied to the levers (7).

4. A device as claimed in claim 3, characterised in that said lower portion of the cap pieces (30) does not comprise the longitudinal cavity (31).

5. A device as claimed in claim 3, characterised in that the cap pieces (30) surround the entire length of the lateral legs (12) and have their upper end abutting against the upper transverse element (11).

6. A device as claimed in the preceding claims, characterised in that the cap pieces (30) are of synthetic resin or elastomeric material, steel tubular elements (34) being provided to surround the cap pieces (30).

7. A device as claimed in claim 1, characterised in that each extension piece (35) comprises:
a first element (351) of relatively soft and deformable material, having a blind cavity (351') extending along only part of the length of the element (351), to receive one end of the bar 13 by slightly forced insertion;
a hollow second element (352) of hard material steel such as steel, mounted over the element (351) by slight forcing and comprising at its outer end a projection (352') which abuts against the end of the first element (351).

8. A device as claimed in claim 1, of the type in which said fork means (10) is fixed to the lower end of a handle (16), characterised by comprising a rod (40) constrained via its lower portion to the handle (16), said rod (40) also comprising second hooking means (43) at its upper end and arranged to hook the vehicle steering wheel (5).

9. A device as claimed in claim 8, characterised in that the lower portion of the rod (40) is rectilinear and, when the rod (40) is hooked to the steering wheel (5), it is inserted as an exact fit, and movable only in the axial direction, through a holed member (48) joined to the handle (16) and projecting therefrom.
